## Europäisches Patentamt

## European Patent Office

## Office européen des brevets

(19)

(11) Veröffentlichungsnummer: **0 289 720 B1**

(12) **EUROPÄISCHE PATENTSCHRIFT**

(45) Veröffentlichungstag der Patentschrift: **08.04.92**

(21) Anmeldenummer: **88102608.2**

(22) Anmeldetag: **23.02.88**

(51) Int. Cl.5: **E04G 21/02**, E04G 21/04, B65G 53/32, C04B 28/04

(54) **Verfahren zum Auftragen einer Spritzbetonschicht.**

(30) Priorität: **30.04.87 DE 3714386**

(43) Veröffentlichungstag der Anmeldung:
**09.11.88 Patentblatt 88/45**

(45) Bekanntmachung des Hinweises auf die Patenterteilung:
**08.04.92 Patentblatt 92/15**

(84) Benannte Vertragsstaaten:
**AT BE CH DE ES FR GB IT LI NL SE**

(56) Entgegenhaltungen:
DE-A- 2 937 469
DE-A- 3 537 274
DE-A- 3 703 762

STRASSEN UND TIEFBAU, April 1984, Isern-hagen D.Müller "Das Betonnass- und Trok-kenspritzverfahren" Seiten 37-40

(73) Patentinhaber: **Degussa Aktiengesellschaft**
**Weissfrauenstrasse 9**
**W-6000 Frankfurt am Main 1(DE)**

(72) Erfinder: **Müller, Karl-Hans, Dr.**
**Robert-Koch-Strasse 17**
**W-6454 Bruchköbel(DE)**
Erfinder: **Barthel, Walter**
**Gartenstrasse 7**
**W-6456 Langenselbold(DE)**

**Beschreibung**

Die Erfindung betrifft ein verfahren zum Auftragen einer Spritzbetonschicht auf eine Oberfläche, wobei aus Zement, Zuschlagstoffen, gegebenenfalls Zusatzstoffen, und Wasser eine pump- sowie spritzfähige Spritzbetonmischung angemacht wird, wobei ein vorgegebener Mengenstrom der Spritzbetonmischung mit Hilfe einer Betonförderpumpe durch eine Betonförderleitung einem Spritzaggregat mit Treiblufteinführungseinrichtung für unter einem Förderdruck von mehreren bar stehende Treibluft zugeführt wird, und wobei die Spritzbetonmischung mit der Treibluft verspritzt wird. Die Erfindung betrifft fernerhin ein Spritzaggregat mit Treiblufteinführungseinrichtung für die Durchführung eines solchen Verfahrens. - Füller meint feinkörnige Füller, insbesondere Flugasche. Die Zusatzstoffe können z. B. Abbindebeschleunigungsmittel oder Abbindeverzögerungsmittel sein. Es kann sich aber auch um Kunstharzkomponenten handeln. Der Ausdruck Förderdruck meint den statischen Druck der Treibluft, die von einer entsprechenden Druckluftquelle zur Verfügung gestellt wird, beim Einleiten in die Treiblufteinführungseinrichtung.

Die bekannten Maßnahmen haben sich bewährt, jedoch ist die Ansteifzeit verhältnismäßig groß. Die pump- und spritzfähige Spritzbetonmischung weist Überschußwasser auf, welches bei der Hydratation nicht verbraucht wird. Es verlängert in störendem Maße die Ansteifzeit. Das beeinträchtigt die Dicke der bei einem Spritzvorgang auftragbaren Spritzbetonschicht. Um die Ansteifzeit zu reduzieren, ist es bekannt, der Spritzbetonmischung Wasserglas beizumischen.

Dieser Zusatz ist jedoch ein störend in den Erhärtungsprozeß eingreifendes Zusatzmittel. Da Wasserglas den pH-Wert des Frischbetons über den normalen Wert von pH = 12,6 anhebt, können unerwünschte Alkalisilikatreaktionen dafür verantwortlich sein, daß die Festigkeit des erhärteten Betons in Abhängigkeit von der Zeit bisweilen eine abfallende Tendenz zeigt.

Aus dem Dokument DE-A 35 37 274 ist ein Spritzbeton, dem als Erstarrungsbeschleuniger hochkonzentrierte wäßrige-alkalische Lösungen von Kaliumaluminat, Kalilauge und Kaliumcarbonat zugegeben werden, bekannt. Zur Verstärkung der Wirkung dieser Erstarrungsbeschleuniger können wasserlösliche Alkalisilikate oder $SiO_2$ zugesetzt werden.

Dieser Spritzbeton hat den Nachteil, daß er stark alkalische und damit die Festigkeit des Betons schwächende Substanzen enthält.

Der Erfindung liegt die Aufgabe zugrunde, die Ansteifzeit zu reduzieren ohne störend in den chemischen Erhärtungsprozeß einzugreifen. Der Spritzbeton soll in einer sehr kurzen Zeitspanne beim Auftreffen und nach dem Auftreffen auf die Oberfläche seine weichplastische Konsistenz in eine erdfeuchte Konsistenz verändern.

Gegenstand der Erfindung ist ein verfahren zum Auftragen einer Spritzbetonschicht auf eine Oberfläche, wobei aus Zement, Zuschlagstoffen, gegebenenfalls Zusatzstoffen, und Wasser eine pump- sowie spritzfähige Spritzbetonmischung angemacht wird,
wobei ein vorgegebenen Mengenstrom der Spritzbetonmischung mit Hilfe iener Betonförderpumpe durch eine Betonförderleitung einem Spritzaggregat mit Treiblufteinführungseinrichtung für unter einem Förderdruck von mehreren bar stehende Treibluft zugeführt wird, und wobei die Spritzbetonmischung mit der Treibluft verspritzt wird, welches dadurch gekennzeichnet ist, daß die Treibluft mit synthetischer Fällungs-Kieselsäure beladen wird, die eine innere Oberfläche von zumindest 25 $m^2/g$ aufweist, und daß mit der Treibluft in den Mengestrom der Spritzbetonmischung die synthetische Kieselsäure in solcher Menge derart eingebracht wird, daß eine innige Vermischung durchgeführt und der aufgetragene Spritzbeton unmittelbar nach dem Aufbringen eine spontane Temperaturerhöhung von einigen Grad Kelvin erfährt.

Gleichzeitig wird dabei die weichplastische Konsistenz in eine erdfeuchte Konsistenz überführt. Da die synthetische Kieselsäure mit der Treibluft in die Spritzbetonmischung eingebracht wird, erfolgt das Einmischen unmittelbar vor dem und bei Verspritzen. Es versteht sich, daß eine entsprechend innige Vermischung durchgeführt werden muß. Die durch die synthetische Kieselsäure hervorgerufene chemische Reaktion (Betonverfestigung) führt zu einer Temperaturerhöhung, die spontan eintritt. Die Temperatur läßt sich experimentell für eine vorgegebene Spritzbetonmischung leicht ermitteln. Erfindungsgemäß wird die spontane Temperaturerhöhung ermittelt, um die Pulvermenge an synthetischer Kieselsäure wirksam so zu dosieren, daß eine beachtliche Reduzierung der Ansteifzeit erreicht wird und folglich wesentlich größere Schichtdicken aufgetragen werden können. Andererseits trägt die synthetische Kieselsäure langfristig zur Festigkeitssteigerung des erhärteten Spritzbetons bei. Vorzugsweise wird die synthetische Kieselsäure in den Mengenstrom der Spritzbetonmischung in solcher Menge eingebracht, daß die spontane Temperaturerhöhung 5 - 10 Grad Kelvin beträgt. Das führt bei üblichen Spritzbetonmischungen dazu, daß mit der Treibluft in den Mengenstrom der Betonmischung, bezogen auf den Zementgehalt, 2 - 6 Gew.-%, vorzugsweise etwa 4 Gew.-% der synthetischen Kieselsäure eingebracht werden. Nach bevorzugter Ausführungsform der Erfindung wird die unter dem Förderdruck stehende Treibluft mit der synthetischen

2

Kieselsäure beladen, was die Bildung von Flocken und Klumpen aus synthetischer Keiselsäure vermeidet.

Eine bevorzugte Ausführungsform der Erfindung ist dadurch gekennzeichnet, daß die Treibluft mit einer synthetischen Kieselsäure beladen wird, die eine innere Oberfläche im Bereich zwischen 35 - 700 $m^2/g$ aufweist. Im Rahmen der Erfindung liegt es, der synthetischen Kieselsäure vor dem Einbringen oder beim Einbringen in die Treibluft feinkörniges Abbindebeschleunigungsmittel beizugeben, z. B. können der synthetischen Kieselsäure 25 - 40 Gew.-% eines Abbindebeschleunigungsmittels beigegeben werden, wobei die Mischung insgesamt mit 100 Gew.-% anzunehmen ist.

Im Rahmen der Erfindung kann mit allen üblichen Spritzbetonmischungen gearbeitet werden, insbesondere auch mit solchen, Die eine Kunstharzkomponente enthalten. Bewährt hat sich eine Spritzbetonmischung, die etwa 360 $kg/m^3$ Zement, 1760 $kg/m^3$ Zuschlagstoff der Sieblinie $B_8/C_8$ und 200 $kg/m^3$ Wasser aufweist. Der Zement ist zweckmäßigerweise ein Portlandzement 45 F.

Als synthetische Kieselsäure kann man bei dem erfindungsgemäßen Verfahren Kieselsäuren einsetzen, die in Winnacker-Küchler, Chemische Technologie, Band 3, Anorganische Technologie II, 4. Auflage, Carl Hauser Verlag München, Wien 1983, Seite 75 bis 90 beschrieben werden.

Von besonderer Bedeutung sind pyrogene Kieselsäuren, die auf dem Wege der Flammenhydrolyse hergestellt wurden sowie Fällungskieselsäuren, wobei bei dem erfindungsgemäßen Verfahren den Fällungskieselsäuren der Vorzug gegeben wird.

Die Fällungskieselsäuren können unvermahlen oder dampfstrahlvermahlen bzw. sprühgetrocknet oder sprühgetrocknet und vermahlen eingesetzt werden.

Beispielhaft können die folgenden Fällungskieselsäuren eingesetzt werden, wobei der Fällungskieselsäure FK 320 DS den Vorzug gegeben wird.

| | FK 320 DS | Durosil | Sipernat 22 | Sipernat 22 S |
|---|---|---|---|---|
| Oberfläche nach BET 1) $m^2/g$ | 170 | 60 | 190 | 190 |
| Mittlere Größe der nm Primärteilchen | 18 | 40 | 18 | 18 |
| Stampfdichte 2) g/1 | 80 | 210 | 270 | 120 |
| pH-Wert 3) | 6,3 | 9 | 6,3 | 6,3 |
| Siebrückstand (nach Mocker 45 $\mu m$) 4) % | 0,01 | 0,3 | 0,5 | 0,1 |
| Trocknungsverlust (2 h, 105 $^\circ$C) 5) % | 6 | 6 | 6 | 6 |
| Glühverlust (2 h, 1000 $^\circ$C) 5) 6) % | 5 | 6 | 5 | 5 |
| $SiO_2$ 7) % | 98 | 98 | 98 | 98 |
| $Na_2$ 7) % | 1 | 1 | 1 | 1 |
| $Fe_2O_3$ 7) % | 0,03 | 0,03 | 0,03 | 0,03 |
| $SO_3$ 7) % | 0,8 | 0,8 | 0,8 | 0,8 |

1) nach DIN 66 131
2) nach DIN 53 194 (nicht gesiebt), ISO 787/XI oder JIS K 5101/18
3) nach DIN 53 200 (in 5 %iger wäßriger Dispersion), ISO 787/IX, ASTM D 1208 oder JIS K 5101/24
4) nach DIN 53 580, ISO 787/XVII oder JIS K 5101/20
5) nach DIN 55 921, ASTM D 1208 oder JIS K 5101/23
6) bezogen auf die 2 Stunden bei 105 $^\circ$C getrocknete Substanz
7) bezogen auf die 2 Stunden bei 1000 $^\circ$C geglühte Substanz

| | Extrusil |
|---|---|
| Oberfläche nach BET 1) $m^2/g$ | 35 |
| Mittlere Größe der nm Primärteilchen | 25 [9] |
| Stampfdichte 2) g/l | 300 |
| pH-Wert 3) | 10 |
| Siebrückstand (nach Mocker, 45 $\mu$m) 4) % | 0,2 |
| Trocknungsverlust (2 h, 105 °C) 5) % | 6 |
| Glühverlust (2 h, 1000 °C) 5) 6) % | 7 |
| $SiO_2$ 7) % | 91 |
| $Al_2O_3$ 7) % | 0,2 |
| CaO 7) % | 6 |
| $Na_2O$ 7) % | 2 |
| $Fe_2O_3$ 7) % | 0,03 |
| $SO_3$ 7) % | |
| $Cl^-$ 7) % | 0,8 |

1) nach DIN 66 131
2) nach DIN 53 194 (nicht gesiebt), ISO 787/XI oder JIS K 5101/18
3) nach DIN 53 200 (in 5 %iger wäßriger Dispersion), ISO 787/IX, ASTM D 1208 oder JIS K 5101/24
4) nach DIN 53 580, ISO 787/XVIII oder JIS K 5101/20
5) nach DIN 55 921, ASTM D 1208 oder JIS K 5101/23
6) bezogen auf die 2 Stunden bei 105 °C getrocknete Substanz
7) bezogen auf die 2 Stunden bei 1000 °C geglühte Substanz
9) Die Größe der Primärteilchen ist bei Silikaten wegen starker Verwachsungen nicht genau zu bestimmen

Die Bestimmung der physikalisch-chemischen Kenndaten erfolgt nach den folgenden Methoden:

pH-Wert (nach DIN 53 200)

Der pH-Wert wird elektrometrisch mit einer Glaselektrode und einem pH-Meter ermittelt. Der pH-Wert von Kieselsäuren liegt im allgemeinen im neutralen, der von Silikaten im schwach alkalischen Bereich.

Siebrückstand <nach DIN 53 580>

Eine Kennzahl für die Feinteiligkeit ist der Siebrückstand. Zur Erfassung der in kleinsten Mengen in Fällungskieselsäuren und Silikaten vorkommenden Anteile nicht oder schwerdispergierbarer Anteile, wird der Siebrückstand nach Mocker bestimmt. Bei diesem Verfahren wird eine Kieselsäuresuspension mit 4 bar Wasserdruck durch das Sieb gespült. Das Sieb wird anschließend getrocknet und der Siebrückstand ausgewogen. Zur Anwendung kommen 45 Micrometer-Siebe, die 325 mesh <nach entsprechen.

Oberfläche nach BET (DIN 66 131)

Die Oberfläche von Kieselsäuren und Silikaten wird nach der BET-Methode in $m^2/g$ gemessen.
Das Verfahren beruht auf der Adsorption von gasförmigem Stickstoff bei der Temperatur des flüssigen Stickstoffs. Die Areameter-Methode nach Haul und Dümbgen kann vorteilhaft angewandt werden. Eine Eichung ist erforderlich. Es wird sowohl die "innere" als auch die "äußere" Oberfläche erfaßt.

Mittlere Größe der Primärteilchen

4

Die mittlere Größe der Primärteilchen läßt sich über elektronenmikroskopische Aufnahmen bestimmen. Hierzu werden die Durchmesser von ca. 3.000 - 5.000 Teilchen bestimmt, deren arithmetisches Mittel errechnet wird. Die einzelnen Primärteilchen liegen im allgemeinen nicht isoliert vor, sondern sind zu Aggregaten und Agglomeraten vereinigt. Die "Agglomerat"-Teilchengröße von Fällungskieselsäuren und Silikaten hängt vom Vermahlungsprozeß ab.

Stampfdichte (nach DIN 53 194)

Es handelt sich um eine Maßangabe für das Gewicht des pulverförmigen Produktes. Ca. 200 ml Kieselsäure werden in dem Meßzylinder des Stampfvolumeters 1.250 mal gestampft. Aus der Einwaage und dem Volumen wird die Stampfdichte berechnet und in g/1 angegeben.

Trocknungsverlust (nach DIN 55 921)

Die Fällungsprodukte enthalten einen kleinen Anteil physikalisch gebundenen Wassers. Nach 2 Stunden Trocknung im Trockenschrank bei 105 °C ist die Hauptmenge des physikalisch gebundenen Wassers entfernt.

Glühverlust (nach DIN 55 921)

Nach 2 Stunden Glühzeit bei 1000 °C ist auch das chemisch in Form von Silanolgruppen gebundene Wasser entfernt. Der Glühverlust wird an der 2 h bei 105 °C getrockneten Substanz bestimmt.

Die Fällungskieselsäure FK 320 DS ist eine Fällungskieselsäure, die nach der Drehrohrtrocknung dampfstrahlvermahlen wurde.

Die Fällungskieselsäure Durosil ist eine unvermahlene drehrohrgetrocknete Fällungskieselsäure.

Die Fällungskieselsäure Sipernat 22 ist eine sprühgetrocknete Fällungskieselsäure.

Die Fällungskieselsäure Sipernat 22 S ist eine sprühgetrocknete und vermahlene Fällungskieselsäure.

Das erfindungsgemäße Verfahren kann auf die folgende Weise durchgeführt werden:

- Das Naßspritzverfahren. Eine in einer Betonmischanlage vorgefertigte Betonmischung wird zur Baustelle transportiert und durch eine Spritzmaschine unter Druckluftzugabe aufgespritzt.

Gegenstand der Erfindung ist es nun, einen Spritzbeton, ausgebracht nach dem Naßspritzverfahren, in seiner Anwendung und Eigenschaft zu verbessern. Die Fällungskieselsäure (z. B. FK 320 DS) wird zu etwa 0,5 - 8 Gew.-%, bezogen auf den Zementanteil, dem Beton zugesetzt.

Ihre Wirkung beruht auf einer Versteifung des Spritzbetons. Der Betonmasse wird spontan Anmachwasser entzogen durch Anlagerung an die Kieselsäure, dem Aushärtungsprozeß später jedoch wieder zugeführt. Der Entzug von Wasser bedeutet, daß die Stellwirkung des Spritzbetons erhöht wird. Spritzversuche zeigten, daß der Rückprall verringert wird, Materialverluste dadurch reduziert werden. Orientierungswerte geben an, daß der Rückprall von der üblichen Marge von ca. 30 Gew.-% auf 10 - 20 Gew.-% reduziert werden kann.

In dem alkalischen Medium des hydraulisch abbindenden Betons (pH-Bereich > 12) wirkt die Kieselsäure während der Erhärtung als aktive Substanz, die die Betoneigenschaften verbessert. Prüfungen der Biegezugfestigkeit ergaben durch die Zugabe von ca. 2 Gew.-% Fällungskieselsäure, bezogen auf den Zementgehalt, einen Anstieg um 15 - 30 %.

Diese Erhöhung der Festigkeit beruht auf der Reaktion der Fällungskieselsäure mit dem überschüssigen $Ca(OH)_2$ des Zementbetons > pH 12. Die Bildung von Calciumsilikathydraten führt zu einer Verfestigung innerhalb der Struktur des künstlichen Steines Beton. Die Fällungskieselsäure als Additiv bewirkt somit eine Verbesserung der Spritzbetonqualität, was dessen Belastbarkeit angeht. Werden die hohen Festigkeitswerte nicht gewünscht, so kann der Zementanteil zurückgenommen werden, was einen wirtschaftlichen Vorteil ergibt.

Die Zugabe von Fällungskieselsäuren zu Spritzbeton führt somit zu folgenden Verbesserungen:

- Verringerung des Rückpralls beim Spritzvorgang. Materialeinsparung = wirtschaftlicher Vorteil.
- Höhere Festigkeit des ausgehärteten Betons ergibt größere Belastbarkeit = technischer Vorteil.
- Zurücknahme des Zementanteils durch Aktivierung im Falle definierter Festigkeitswerte = wirtschaftlicher Vorteil.

Diese Wirkungsweisen sind unabhängig von der Art des Spritzbetonverfahrens.

Beim Naßspritzverfahren wird die Fällungskieselsäure in oder vor der Spritzdüse in den Betonstrom direkt eingegeben und homogen vermischt.

Die Verwendung von Fällungskieselsäuren in Spritzbeton dient der Verbesserung der Betoneigenschaften, besonders für den Einsatz im Tunnelbau und bei der Betoninstandsetzung (Sanierung).

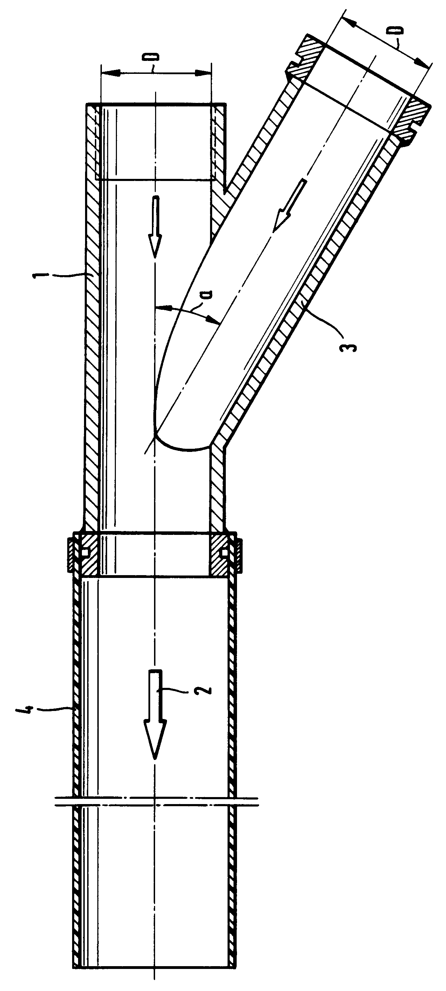

Zur Durchführung des beschriebenen Verfahrens kann das in der Zeichnung dargestellte Spritzaggregat eingesetzt werden.

Die einzige Figur zeigt einen Längsschnitt durch ein solches Spritzaggregat.

Man erkennt in der Figur ein gerades Führungsrohr 1 für die mit der synthetischen Kieselsäure beladene Treibluft und ein in das gerade Führungsrohr 1 in der durch den Pfeil 2 angedeuteten Spritzrichtung, jedoch schräg, eingeführtes Zuführungsrohr 3 für die vorher angemachte und mit der Betonförderpumpe zugeführte Spritzbetonmischung. Das Spritzaggregat kann aber auch anders geschaltet werden, so daß das gerade Führungsrohr 1 für die Führung der Spritzbetonmischung und das schräg eingeführte Zuführungsrohr 3 für die mit der synthetischen Kieselsäure beladene Treibluft dient. An das gerade Führungsrohr 1 ist im Ausführungsbeispiel und nach bevorzugter Ausführungsform der Erfindung ein von einer Bedienungsperson beim Auftragen des Spritzbetons führbarer Schlauch 4 angeschlossen. Er dient gleichzeitig als Verwirbelungslanze oder Verwirbelungsschlauch 4. Entsprechend könnte man mit einem Verwirbelungsrohr arbeiten. In Bezug auf die Betonförderleitung kann das gerade Führungsrohr 1 auch als Düse ausgeführt und dazu mit einer Einschnürung versehen sein, in der sich der statische Druck in kinetische Energie umsetzt. Das dargestellte Spritzaggregat ist für einen Förderdruck der Treibluft von über 5 bar, vorzugsweise von etwa 8 bar, eingerichtet. Das Führungsrohr 1 sowie das Zuführungsrohr 3 besitzen dazu einen Innendurchmesser D von etwa 50 mm. Der Einführungswinkel a beträgt etwa 30 °.

**Patentansprüche**

1.  Verfahren zum Auftragen einer Spritzbetonschicht auf eine Oberfläche,
    wobei aus Zement, Zuschlagstoffen, gegebenenfalls Zusatzstoffen, und Wasser eine pump- sowie spritzfähige Spritzbetonmischung angemacht wird,
    wobei ein vorgegebener Mengenstrom der Spritzbetonmischung mit Hilfe einer Betonförderpumpe durch eine Betonförderleitung einem Spritzaggregat mit Treiblufteinführungseinrichtung für unter einem Förderdruck von mehreren bar stehende Treibluft zugeführt wird, und wobei die Spritzbetonmischung mit der Treibluft verspritzt wird, dadurch gekennzeichnet, daß die Treibluft mit synthetischer Fällungskieselsäure beladen wird, die eine innere Oberfläche von zumindest 25 m$^2$/g aufweist, und daß mit der Treibluft in den Mengenstrom der Spritzbetonmischung die synthetische Kieselsäure in solcher Menge derart eingebracht wird, daß eine innige Vermischung durchgeführt wird und der aufgetragene Spritzbeton unmittelbar nach dem Aufbringen eine spontane Temperaturerhöhung von einigen Grad Kelvin erfährt.

2.  Verfahren nach Anspruch 1, dadurch gekennzeichnet, daß die synthetische Kieselsäure in den Mengenstrom der Spritzbetonmischung in solcher Menge eingebracht wird, daß die spontane Temperaturerhöhung 5 bis 10 Grad Kelvin beträgt.

3.  Verfahren nach Anspruch 1 oder 2, dadurch gekennzeichnet, daß mit der Treibluft in den Mengenstrom der Spritzbetonmischung, bezogen auf den Zementanteil, 2 - 6 Gew.-% der synthetischen Kieselsäure eingebracht werden.

4.  Verfahren nach einem der Ansprüche 1 oder 2, dadurch gekennzeichnet, daß in den Mengenstrom der Betonmischung, bezogen auf den Zementanteil, etwa 4 Gew.-% synthetische Kieselsäure eingebracht werden.

5.  Verfahren nach einem der Ansprüche 1 bis 4, dadurch gekennzeichnet, daß die unter dem Förderdruck stehende Treibluft mit der synthetischen Kieselsäure beladen wird.

6.  Verfahren nach einem der Ansprüche 1 bis 5, dadurch gekennzeichnet, daß die Treibluft mit einer synthetischen Kieselsäure beladen wird, die eine innere Oberfläche im Bereich zwischen 75 - 700 m$^2$/g aufweist.

7.  Verfahren nach einem der Ansprüche 1 bis 6, dadurch gekennzeichnet, daß die synthetische Kieselsäure vor dem Einbringen oder beim Einbringen in die Treibluft mit einem feinkörnigen Abbindebeschleunigungsmittel gemischt wird.

8.  Verfahren nach Anspruch 7, dadruch gekennzeichnet, daß der synthetischen Kieselsäure 20 - 45 Gew.-

EP 0 289 720 B1

% des Abbindebeschleunigungsmittels beigegeben werden, wobei die Mischung insgesamt mit 100 Gew.-% anzunehmen ist.

9. Verfahren nach einem der Ansprüche 1 bis 8 dadurch gekennzeichnet, daß mit einer Spritzbetonmischung bearbeitet wird, die etwa

    360 kg/m$^3$    Zement,
    1760 kg/m$^3$    Zuschlagstoffe der Sieblinie $B_8/C_8$,
    200 kg/m$^3$    Wasser

aufweist.

10. Verfahren nach Anspruch 9, dadurch gekennzeichnet, daß mit Portlandzement 45 F gearbeitet wird.

**Claims**

1. A process for applying a layer of air-placed concrete to a surface in which a pumpable and sprayable air-placed concrete mix is prepared from cement, aggregates, optionally additives and water, a predetermined volume stream of the air-placed concrete mix is delivered by a concrete delivery pump through a concrete delivery pipe to an air-placing unit comprising means for introducing propelling air under a delivery pressure of several bar and the air-placed concrete mix is sprayed with the propelleing air, characterized in that the propelling air is charged with synthetic precipitated silica having an inner surface of at least 25 m$^2$/g and in that the synthetic silica is introduced with the propelling air into the volume stream of the air-placed concrete mix in such a quantity that intimate mixing takes place and, immediately after application, the air-placed concrete applied undergoes a spontaneous increase in temperature of a few degrees Kelvin.

2. A process as claimed in claim 1, characterized in that the synthetic silica is introduced into the volume stream of the air-placed concrete mix in such a quantity that the Spontaneous increase in temperature measures 5 to 10 degrees Kelvin.

3. A process as claimed in claim 1 or 2, characterized in that 2 to 6% by weight, based on the cement, of the synthetic silica are introduced with the propelling air into the volume stream of the air-placed concrete mix.

4. A process as claimed in claim 1 or 2, characterized in that approximately 4% by weight, based on the cement, of synthetic silica are introduced into the volume stream of the concrete mix.

5. A process as claimed in any of claims 1 to 4, characterized in that the propelling air under the delivery pressure is charged with the synthetic silica.

6. A process as claimed in any of claims 1 to 5, characterized in that the propelling air is charged with a synthetic silica having an inner surface of 75 to 700 m$^2$/g.

7. A process as claimed in any of claims 1 to 6, characterized in that the synthetic silica is mixed with a fine-grained setting accelerator before or during introduction into the propelling air.

8. A process as claimed in claim 7, characterized in that 20 to 45% by weight, based on the mix as a whole (100% by weight), of the setting accelerator are added to the synthetic silica.

9. A process as claimed in any of claims 1 to 8, characterized in that the air-placed concrete mix used contains approximately

    360 kg/m$^3$    cement,
    1760 kg/m$^3$    aggregates having a particle size distribution of $B_8/C_8$,
    200 kg/m$^3$    water.

10. A process as claimed in claim 9, characterized in that 45 F Portland cement is used.

**Revendications**

7

**EP 0 289 720 B1**

1. Procédé pour l'application d'une couche de béton projeté sur une surface, dans lequel on gâche une composition de béton projeté, à base de ciment, granulats, éventuellement additifs et eau, apte au pompage ainsi qu'à la projection, dans lequel on envoie un courant massique préétabli de la composition de béton projeté, à l'aide d'une pompe de transport de béton, par une conduite de transport de béton, à un appareil de projection à dispositif d'introduction d'air propulseur pour de l'air propulseur se trouvant sous une pression de transport de plusieurs bars, et dans lequel la composition de béton projeté est projetée à l'aide de l'air propulseur, caractérisé en ce que l'air propulseur est chargé d'acide silicique précipité de synthèse qui présente une superficie interne d'au moins 25 $m^2/g$, et en ce que l'acide silicique de synthèse est introduit à l'aide de l'air propulseur dans le courant massique de la composition de béton projeté, en une quantité telle qu'il s'effectue un mélange intime et que le béton projeté appliqué subit immédiatement après l'application une élévation spontanée de la température de quelques degrés Kelvin.

2. Procédé selon la revendication 1, caractérisé en ce que l'acide silicique de synthèse est introduit dans le courant massique de la composition de béton projeté en une quantité telle que l'élévation spontanée de la température va de 5 à 10° Kelvin.

3. Procédé selon la revendication 1 ou 2, caractérisé en ce que sont introduits avec l'air propulseur dans le courant massique de la composition de béton projeté, de 2 à 6 % en poids d'acide silicique de synthèse, par rapport à la quantité de ciment.

4. Procédé selon une des revendications 1 ou 2, caractérisé en ce que sont introduits dans le courant massique de la composition de béton, par rapport à la quantité de ciment, environ 4 % en poids d'acide silicique de synthèse.

5. Procédé selon l'une quelconque des revendications 1 à 4, caractérisé en ce que l'air propulseur qui se trouve sous la pression de transport est chargé avec l'acide silicique de synthèse.

6. Procédé selon l'une quelconque des revendications 1 à 5, caractérisé en ce que l'air propulseur est chargé avec un acide silicique de synthèse qui présente une superficie interne dans la plage comprise entre 75 et 700 $m^2/g$.

7. Procédé selon l'une quelconque des revendications 1 à 6, caractérisé en ce que l'acide silicique de synthèse, avant l'introduction ou lors de l'introduction dans l'air propulseur, est mélangé avec un accélérateur de prise à grains fins.

8. Procédé selon la revendication 7, caractérisé en ce que l'on ajoute à l'acide silicique de synthèse de 20 à 45 % en poids de l'accélérateur de prise, 100 % en poids étant attribués au mélange total.

9. Procédé selon l'une quelconque des revendications 1 à 8, caractérisé en ce que l'on opère avec une composition de béton projeté qui comporte environ :
   360 kg/$m^3$     de ciment,
   1760 kg/$m^3$     de granulats de granulométrie $B_8/C_8$,
   200 kg/$m^3$     d'eau.

10. Procédé selon la revendication 9, caractérisé en ce que l'on opère avec du ciment Portland 45 F.

8